(19) Europäisches Patentamt
European Patent Office
Office européen des brevets

(11) **EP 3 452 420 B1**

(12) **FASCICULE DE BREVET EUROPEEN**

(45) Date de publication et mention de la délivrance du brevet:
**18.03.2020 Bulletin 2020/12**

(21) Numéro de dépôt: **17725709.4**

(22) Date de dépôt: **03.05.2017**

(51) Int Cl.:
***C03C 3/087** (2006.01)*   ***C03C 4/02** (2006.01)*
***C03C 4/08** (2006.01)*

(86) Numéro de dépôt international:
**PCT/FR2017/051052**

(87) Numéro de publication internationale:
**WO 2017/191410 (09.11.2017 Gazette 2017/45)**

(54) **COMPOSITION DE VERRE SILICO-SODO-CALCIQUE**

KALK-NATRON-SILIKATGLASZUSAMMENSETZUNG

SODA-LIME-SILICA GLASS COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2016 FR 1654043**

(43) Date de publication de la demande:
**13.03.2019 Bulletin 2019/11**

(73) Titulaire: **Verallia France**
**92400 Courbevoie (FR)**

(72) Inventeur: **FERRARO, Simone**
**17014 Cairo Montenotte (SV) (IT)**

(74) Mandataire: **Agasse, Stéphane et al**
**Cabinet Germain & Maureau**
**12, rue Boileau**
**69006 Lyon (FR)**

(56) Documents cités:
**WO-A2-2009/150382     FR-A1- 2 903 397**
**US-A- 4 312 953**

**Description**

La présente invention se rapporte à une composition de verre silico-sodo-calcique destinée à la réalisation d'objets, en particulier en verre creux, tels que bouteilles, flacons, ou pots, présentant une transmission lumineuse élevée et une coloration dorée.

Outre les bouteilles en verre clair présentant par nature une transmission lumineuse élevée, les teintes des bouteilles proposées à l'industrie agroalimentaire, notamment dans le secteur du vin, varient dans des tons vert, ambre, ou encore brun-rouge. Les teintes ambre sont généralement obtenues par ajout de soufre et d'oxyde de fer dans un verre réduit. Les sulfures de fer ainsi formés donnent au verre une teinte jaune-ambre du fait d'une absorption très intense pour des longueurs d'ondes situées autour de 400nm. Ces teintes présentent généralement une transmission lumineuse relativement faible. Par exemple, WO 2009/150382, US 4312953 et FR 2903397 décrivent des compositions de verre silico-sodo-calcique coloré.

Le choix de la teinte d'une bouteille est lié notamment à des considérations mercatiques. L'industrie agroalimentaire reste donc avide de nouvelles teintes permettant la mise en valeur des contenants. Dans ce contexte, la présente invention propose une composition de verre présentant une teinte dorée ainsi qu'une transmission lumineuse supérieure à 50% tout en conservant un pouvoir filtrant élevé afin d'éviter l'altération des propriétés organoleptiques des contenus, notamment par les rayonnements ultraviolets.

Le calcin est la matière première principale pour la fabrication des emballages en verre. Chaque bouteille contient en moyenne 60% de verre recyclé, ces proportions étant amenées à augmenter avec le développement des réseaux de recyclage. Une teinte dorée associée à une transmission lumineuse élevée et un pouvoir filtrant élevé est difficile à obtenir en considérant les contraintes liées à la fabrication des emballages en verre. En effet, la présence d'éléments colorants dans le calcin, en plus de ceux présents dans les impuretés des matières première naturelles, a pour effet de réduire la transmission lumineuse des verres obtenus. Il est alors nécessaire d'utiliser des calcins blancs, voire extra-blancs, contenant peu d'éléments colorants pour atteindre les niveaux de transmission lumineuse souhaités. Or, l'utilisation de ces calcins pose un problème de disponibilité et augmente le coût de production. La présente invention permet au contraire de limiter l'utilisation de calcins blancs ou extra-blanc.

Ainsi, la présente invention concerne une composition de verre silico-sodo-calcique comprenant les agents absorbants optiques suivants dans une teneur variant dans les limites pondérales suivantes :

| | |
|---|---|
| $F_2O_3$ (fer total) | 100 à 1600 ppm, |
| $Cr_2O_3$ | 20 à 100 ppm, |
| $S^{2-}$ | 10 à 50 ppm, |

ladite composition présentant un redox, défini par le rapport molaire entre le fer ferreux et le fer total, inférieur à 0,70, de préférence inférieur à 0,68, plus préférentiellement inférieur à 0,67, voire inférieur à 0,66.

$Cr_2O_3$ représente respectivement la teneur totale en chrome dans le verre, exprimée respectivement en trioxyde de chrome. $S^{2-}$ représente la quantité de soufre présent dans le verre sous forme d'ions sulfures.

L'utilisation des agents absorbants optiques précités dans les limites de l'invention permet de conférer les propriétés recherchées au verre. L'action des agents absorbants pris individuellement est en général bien décrite dans la littérature.

La présence de fer dans une composition de verre peut résulter des matières premières, en tant qu'impuretés, ou d'un ajout délibéré visant à colorer le verre. Il est connu que le fer existe dans la structure du verre sous la forme d'ions ferriques ($Fe^{3+}$) et d'ions ferreux ($Fe^{2+}$). La présence d'ions $Fe^{3+}$ confère au verre une légère coloration jaune et permet d'absorber les radiations ultraviolettes. La présence d'ions $Fe^{2+}$ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse.

Dans la présente invention, la teneur en fer total dans la composition est comprise entre 100 et 1600 ppm, de préférence supérieure ou égale à 500 ppm, voire 800 ppm et/ou inférieure ou égale à 1500 ppm, voire 1400 ppm. Une teneur en fer inférieure à 100 ppm nécessite d'avoir recours à des matières premières ayant un degré de pureté élevé qui se traduit par un coût du verre bien trop important pour un usage en tant que bouteille ou flacon.

Le soufre est présent dans le verre soit volontairement, ajouté en tant que colorant ou affinant du verre (il aide à éliminer les inclusions gazeuses), ou simplement présent dans certaines matières premières. Le soufre existe dans le verre sous deux degrés d'oxydation : les ions sulfates $SO_4^{2-}$ et, dans des conditions réductrices, les ions sulfures $S^{2-}$. Ces derniers, lorsqu'ils sont présents en liaison avec des ions ferriques $Fe^{3+}$ donnent naissance à une coloration jaune-ambre extrêmement intense résultant d'un transfert électronique entre les deux ions. Dans le cadre de la présente invention des teneurs en ions sulfures inférieures à 10 ppm ne permettent pas d'obtenir la teinte dorée souhaitée. Des teneurs supérieures à 50 ppm confèrent au contraire des teintes trop prononcées réduisant la transmission lumineuse du verre. Les résultats les plus satisfaisants sont obtenus avec des teneurs de préférence inférieures ou égales à 40 ppm, et/ou supérieures ou égales à 20 ppm.

Le chrome est présent dans les verres selon l'invention sous forme d'ions $Cr^{3+}$, lesquels confèrent une coloration verte. La teneur, exprimée en $Cr_2O_3$, est avantageusement la plus faible possible afin de conserver une transmission lumineuse suffisante, tout en restant supérieure ou égale à 20 ppm. Les conditions d'oxydo-réduction du verre selon l'invention permettent cependant d'accepter des teneurs en chrome jusqu'à 100 ppm, de préférence inférieure à 80 ppm, voire inférieure à 50 ppm, par exemple entre 20 et 40 ppm. Il est ainsi possible d'utiliser des matières premières, notamment des calcins mi-blancs, de pureté moins importante qui sont plus abondants et donc plus avantageuses du point de vue économique.

En règle générale, il est difficile de prévoir les propriétés optiques et énergétiques d'un verre lorsque celui-ci contient plusieurs agents absorbants optiques. Ces propriétés résultent en effet d'une interaction complexe entre les différents agents dont le comportement est en outre lié à la matrice verrière employée et à leur état d'oxydation.

Dans la présente invention, le choix des absorbants optiques, de leur teneur et de leur état d'oxydoréduction est déterminant pour l'obtention des propriétés optiques requises.

Le redox, défini par le rapport de la teneur molaire entre le fer ferreux et le fer total, qui est un indicateur de l'état d'oxydoréduction de verre, doit être inférieur à 0,70 pour obtenir la teinte dorée souhaitée. Il est de préférence inférieur à 0,68, voire inférieur à 0,67, ou même inférieur à 0,66, tout en restant de préférence supérieur à 0,50, voire supérieur à 0,60. Cette gamme de rédox s'est révélée apte à former les espèces colorantes désirées.

Le rédox est généralement contrôlé à l'aide d'agents oxydants tels que le sulfate de sodium, et d'agents réducteurs tels que du coke, dont les teneurs relatives sont ajustées pour obtenir le rédox souhaité. Les formes réduites du soufre peuvent également jouer un rôle réducteur vis-à-vis des oxydes de fer, ce qui rend la prévision des propriétés optiques d'un verre résultant d'un mélange donné particulièrement complexe, voire impossible.

Les compositions de verre conformes à l'invention sont telles que le verre présente de préférence une longueur d'onde dominante comprise entre 574 et 578 nm, de préférence entre 575,5 et 577 nm, une pureté de 45 à 70 %, et un facteur de transmission lumineuse supérieur à 50 %, notamment de 50 à 65 %. Ces paramètres sont calculés pour une épaisseur de 5 mm à partir d'un spectre expérimental d'échantillons de verre, en prenant en référence l'illuminant standard C et l'observateur de référence « CIE 1931 », tous deux définis par la C.I.E. (Commission Internationale de l'Eclairage). Les compositions de verres selon l'invention présentent également un pouvoir filtrant pour une épaisseur de 5 mm supérieur ou égal à 80 %, notamment supérieur ou égal à 85 % et/ou inférieur à 95 %, ledit pouvoir filtrant étant défini comme étant égal à la valeur de 100% diminuée de la moyenne arithmétique de la transmission entre 330 et 450 nm.

Dans le cadre de la présente invention, une composition particulièrement préférée comprend les agents absorbants optiques suivants dans une teneur variant dans les limites pondérales suivantes :

| | |
|---|---|
| $Fe_2O_3$ (fer total) | 500 à 1400 ppm, |
| $Cr_2O_3$ | 20 à 80 ppm, de préférence 20 à 40 ppm, |
| $S^{2-}$ | 20 à 40 ppm. |

L'expression silico-sodo-calcique est ici utilisée dans le sens large et concerne toute composition de verre constituée d'une matrice verrière qui comprend les constituants suivants (en pourcentage en poids).

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 10 % |
| $Na_2O$ | 10 - 18 % |
| $K_2O$ | 0 - 5 % |
| BaO | 0 - 5 % |

On convient ici que la composition de verre silico-sodo-calcique peut comprendre, outre les impuretés inévitables contenues notamment dans les matières premières, une faible proportion (jusqu'à 1 %) d'autres constituants, par exemple des agents aidant à la fusion ou l'affinage du verre ($SO_3$, Cl, $Sb_2O_3$, $As_2O_3$) ou provenant d'un ajout éventuel de calcin recyclé dans le mélange vitrifiable.

Dans les verres selon l'invention, la silice est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 64 %, la résistance hydrolytique du verre décroît rapidement et la transmission dans le visible diminue également.

L'alumine $Al_2O_3$ joue un rôle particulièrement important sur la résistance hydrolytique du verre. Lorsque le verre selon l'invention est destiné à former des corps creux contenant des liquides, la teneur en alumine est de préférence supérieure ou égale à 1%.

Les oxydes alcalins $Na_2O$ et $K_2O$ facilitent la fusion du verre et permettent d'ajuster sa viscosité aux températures élevées afin de le maintenir proche de celle d'un verre standard. $K_2O$ peut être utilisé jusqu'à 5 % car au-delà se pose le problème du coût élevé de la composition. Par ailleurs, l'augmentation du pourcentage de $K_2O$ ne peut se faire, pour l'essentiel, qu'au détriment de $Na_2O$, ce qui contribue à augmenter la viscosité. La somme des teneurs en $Na_2O$ et $K_2O$, exprimées en pourcentages pondéraux, est de préférence égale ou supérieure à 10 % et avantageusement inférieure à 20 %. Si la somme de ces teneurs est supérieure à 20 % ou si la teneur en $Na_2O$ est supérieure à 18 %, la résistance hydrolytique est fortement réduite. Les verres selon l'invention sont de préférence exempts d'oxyde de lithium $Li_2O$ du fait de son coût élevé.

Les oxydes alcalino-terreux permettent d'adapter la viscosité du verre aux conditions d'élaboration.

MgO peut être utilisé jusqu'à 10 % environ et sa suppression peut être compensée, au moins en partie, par une augmentation de la teneur en $Na_2O$ et/ou $SiO_2$. De préférence, la teneur en MgO est inférieure à 5 % et de manière particulièrement avantageuse est inférieure à 2 % ce qui a pour effet d'augmenter la capacité d'absorption dans l'infrarouge sans nuire à la transmission dans le visible. De faibles teneurs en MgO permettent en outre de diminuer le nombre de matières premières nécessaires à la fusion du verre.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres selon l'invention sont exempts de BaO et également d'oxyde de strontium (SrO), ces éléments présentant un coût élevé.

Outre le respect des limites définies précédemment pour la variation de la teneur de chaque oxyde alcalino-terreux, il est préférable pour obtenir les propriétés de transmission recherchées de limiter la somme des pourcentages pondéraux de MgO, CaO et BaO à une valeur égale ou inférieure à 15 %.

La composition selon l'invention ne comprend en général pas d'autres agent absorbant ou d'autres colorants (notamment CoO, $MoO_3$, $CeO_2$, $V_2O_3$, ou MnO), à l'exception d'impuretés inévitables. De manière particulièrement préférée, les verres selon l'invention ne contiennent pas d'oxydes de terres rares, et notamment pas d'oxyde de néodyme ni d'oxyde de cérium, lesquels sont extrêmement coûteux. Avantageusement, le verre selon l'invention est exempt de particules colorantes à base de CdS et/ou CdSe du fait de leur toxicité importante.

La composition de verre conforme à l'invention est apte à être fondue dans les conditions de production du verre destiné au formage de corps creux par les techniques de pressage, de soufflage, de moulage. La fusion a généralement lieu dans des fours à flamme, éventuellement pourvus d'électrodes assurant le chauffage du verre dans la masse par passage du courant électrique entre les deux électrodes. Pour faciliter la fusion, et notamment rendre celle-ci mécaniquement intéressante, la composition de verre présente avantageusement une température correspondant à une viscosité $\eta$ telle que $\log \eta = 2$ qui est inférieure à 1500°C. De préférence encore, la température correspondant à la viscosité $\eta$ telle que $\log \eta = 3,5$ (notée $T(\log \eta = 3,5)$) et la température au liquidus (notée $T_{liq}$) satisfont la relation :

$$T(\log \eta = 3,5) - T_{liq} > 20°C$$

et mieux encore :

$$T(\log \eta = 3,5) - T_{liq} > 50°C.$$

La composition de verre selon l'invention est obtenue façon classique par fusion d'un mélange vitrifiable dans un four. Le verre selon l'invention ne nécessite en général pas d'ajout d'agents absorbant autres que ceux contenus dans les matières premières. Les quantités d'oxyde de fer et d'oxyde de chrome nécessaire à la composition selon l'invention sont en effet apportées notamment par les calcins.

Un autre objet de la présente invention concerne ainsi un procédé de fabrication d'un verre présentant une composition selon l'invention, comprenant une étape de fusion du mélange vitrifiable dans un four de fusion, ledit mélange vitrifiable apportant l'intégralité des oxydes compris dans ladite composition, et une étape de formage dudit verre pour obtenir un objet creux.

L'invention a également pour objet l'objet en verre creux formé par moulage, pressage ou soufflage présentant une composition chimique et des propriétés optiques telles que définies précédemment.

La présente invention sera mieux comprise à la lecture de la description détaillée ci-après d'exemples de réalisation non limitatifs ci-dessous.

La composition de verre suivante selon l'invention a été préparée à partir d'un mélange vitrifiable comprenant 25% en poids de calcin mi-blanc, les teneurs étant exprimées en pourcentages pondéraux :

| | |
|---|---|
| $SiO_2$ | 73,6 % |
| $Na_2O$ | 12,4 % |
| $K_2O$ | 0,8 % |
| CaO | 10,3 % |
| MgO | 1,1 % |
| $Al_2O_3$ | 0,35 % |
| $Fe_2O_3$ (total) | 1430 ppm |
| $Cr_2O_3$ | 30 ppm |
| $S^{2-}$ | 36 ppm |
| Redox | 0,65 |

Les teneurs pondérales en oxydes de fer et de chrome ainsi qu'en ions sulfures, sont mesurées par analyse chimique.

Le redox défini comme étant le rapport molaire du FeO au fer total exprimé sous forme de $Fe_2O_3$. La teneur en fer total est mesurée par fluorescence X et la teneur en FeO est mesurée par chimie utilisant la voie humide.

Les valeurs des propriétés optiques suivantes ont été calculées pour une épaisseur de verre de 5 mm à partir de spectres expérimentaux :

- le facteur de transmission lumineuse, calculé entre 380 et 780 mm, ainsi que la longueur d'onde dominante et la pureté. Ces calculs sont effectués en prenant en considération l'illuminant C tel que défini par la norme ISO/CIE 10526 et l'observateur de référence colorimétrique C.I.E. 1931 tel que défini par la norme ISO/CIE 10527.

- le pouvoir filtrant défini comme étant égal à la valeur de 100% diminuée de la moyenne arithmétique de la transmission entre 330 et 450 nm.

Les résultats sont présentés dans ci-dessous :

| | |
|---|---|
| Longueur d'onde dominante | 576 nm |
| Pureté | 63 % |
| Facteur de transmission lumineuse | 56 % |

## Revendications

1. Composition de verre silico-sodo-calcique, comprenant les agents absorbants optiques ci-après dans une teneur variant dans les limites pondérales suivantes :

| | |
|---|---|
| $Fe_2O_3$ (fer total) | 100 à 1600 ppm, |
| $Cr_2O_3$ | 20 à 100 ppm, |
| $S^{2-}$ | 10 à 50 ppm, |

la composition présentant un rédox, défini par le rapport molaire entre le fer ferreux et le fer total, inférieur à 0,7.

2. Composition selon la revendication 1, telle que la teneur en oxyde de fer ($Fe_2O_3$) est comprise entre 500 et 1500 ppm, notamment entre 800 et 1400 ppm.

3. Composition selon l'une des revendications précédentes, telle que la teneur en oxyde de chrome ($Cr_2O_3$) est voire comprise entre 20 et 80 ppm.

**4.** Composition selon l'une des revendications précédentes, telle que la teneur en ions sulfures ($S^{2-}$) est comprise entre 20 et 40 ppm.

**5.** Composition selon l'une des revendications précédentes, telle que le rédox est inférieur à 0,68, de préférence inférieur à 0,67, plus préférentiellement inférieur à 0,66.

**6.** Composition selon l'une des revendications précédentes, telle que le verre présente, pour une épaisseur de 5 mm, une longueur d'onde dominante comprise entre 574 et 578 nm, une pureté de 45 à 70 %, et un facteur de transmission lumineuse supérieur à 50 %.

**7.** Composition selon l'une des revendications précédentes, telle que le verre présente, pour une épaisseur de 5 mm, un pouvoir filtrant supérieur ou égal à 80 %.

**8.** Objet en verre creux formé par moulage, pressage ou soufflage, tel que sa composition chimique et ses propriétés optiques sont définies par l'une quelconque des revendications 1 à 7.

**Patentansprüche**

**1.** Natron-Kalk-Silicatglas-Zusammensetzung, umfassend die nachstehenden optischen Absorbierungsmittel in einer innerhalb der folgenden Gewichtsgrenzen variierenden Menge:

| | |
|---|---|
| $Fe_2O_3$ (Gesamteisen) | 100 bis 1600 ppm, |
| $Cr_2O_3$ | 20 bis 100 ppm, |
| $S^{2-}$ | 10 bis 50 ppm, |

wobei die Zusammensetzung einen Redox aufweist, definiert durch das Molarverhältnis zwischen dem Eisen(II) und dem Gesamteisen, von weniger als 0,7.

**2.** Zusammensetzung nach Anspruch 1, solcherart, dass der Gehalt an Eisenoxid ($Fe_2O_3$) zwischen 500 und 1500 ppm beträgt, vornehmlich zwischen 800 und 1400 ppm.

**3.** Zusammensetzung nach einem der vorhergehenden Ansprüche, solcherart, dass der Gehalt an Chromoxid ($Cr_2O_3$) sogar zwischen 20 und 80 ppm beträgt.

**4.** Zusammensetzung nach einem der vorhergehenden Ansprüche, solcherart, dass der Gehalt an Sulfidionen ($S^{2-}$) zwischen 20 und 40 ppm beträgt.

**5.** Zusammensetzung nach einem der vorhergehenden Ansprüche, solcherart, dass der Redox weniger als 0,68 beträgt, bevorzugt weniger als 0,67, bevorzugter weniger als 0,66.

**6.** Zusammensetzung nach einem der vorhergehenden Ansprüche, solcherart, dass das Glas für eine Dicke von 5 mm eine dominante Wellenlänge zwischen 574 und 578 nm, eine Reinheit von 45 bis 70 % und einen Lichttransmissionsgrad von über 50 % aufweist.

**7.** Zusammensetzung nach einem der vorhergehenden Ansprüche, sodass das Glas für eine Dicke von 5 mm eine Filterkraft über oder gleich 80 % aufweist.

**8.** Hohles Glasobjekt, ausgebildet durch Gießen, Pressen oder Blasen, sodass seine chemische Zusammensetzung und seine optischen Eigenschaften durch einen der Ansprüche 1 bis 7 definiert werden.

**Claims**

**1.** A soda-lime-silica glass composition, comprising the optical absorbing agents hereinafter in a content varying within the following weight limits:

| Fe$_2$O$_3$ (total iron) | 100 to 1600 ppm, |
|---|---|
| Cr$_2$O$_3$ | 20 to 100 ppm, |
| S$^{2-}$ | 10 to 50 ppm, |

the composition having a redox, defined by the molar ratio between the ferrous iron and the total iron, lower than 0.7.

2. The composition according to claim 1, such that the iron oxide (Fe$_2$O$_3$) content is comprised between 500 and 1500 ppm, in particular between 800 and 1400 ppm.

3. The composition according to any of the preceding claims, such that the chromium oxide (Cr$_2$O$_3$) content is comprised between 20 and 80 ppm.

4. The composition according to any of the preceding claims, such that the sulfides ions (S$^{2-}$) content is comprised between 20 and 40 ppm.

5. The composition according to any of the preceding claims, such that the redox is lower than 0.68, preferably lower than 0.67, more preferably lower than 0.66.

6. The composition according to any of the preceding claims, such that the glass has, for a 5 mm thickness, a dominant wavelength comprised between 574 and 578 nm, a purity from 45 to 70%, and a light transmission factor higher than 50%.

7. The composition according to any of the preceding claims, such that the glass has, for a 5 mm thickness, a filtering power higher than or equal to 80%.

8. A hollow glass item formed by molding, pressing or blowing, such that its chemical composition and its optical properties are defined by any one of claims 1 to 7.

**EP 3 452 420 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009150382 A
- US 4312953 A
- FR 2903397